# EUROPÄISCHE PATENTSCHRIFT

(11) **EP 4 168 721 B1**
(45) Veröffentlichungstag und Bekanntmachung des Hinweises auf die Patenterteilung: **21.08.2024**
(21) Anmeldenummer: 21735645.0
(22) Anmeldetag: 22.06.2021
(51) Int. Cl.: F24S 25/613, H02S 20/23

(54) **BEFESTIGUNGSVORRICHTUNG ZUR BEFESTIGUNG VON SOLARMODULEN**
FASTENING APPARATUS FOR FASTENING SOLAR MODULES
DISPOSITIF DE FIXATION POUR FIXER DES MODULES SOLAIRES

(30) Priorität: 22.06.2020 DE 102020116376
(43) Veröffentlichungstag der Anmeldung: 26.04.2023
(73) Patentinhaber: Schletter International B.V., 1101 Amsterdam (NL)
(72) Erfinder: ZAPFE, Cedrik, 85567 Grafing (DE); SCHMID, Bernhard, 83562 Rechtmehring (DE)
(74) Vertreter: Mötsch, Andreas
(86) Internationale Anmeldenummer: PCT/EP2021/066892
(87) Internationale Veröffentlichungsnummer: WO 2021/259885

(56) Entgegenhaltungen:
- EP-A1- 2 527 762
- EP-A1- 3 623 721
- EP-A2- 1 348 915
- WO-A2-2006/101392
- DE-A1- 102005 058 065
- DE-A1- 102010 054 175
- DE-A1- 102012 011 969
- DE-A1- 102012 213 734
- DE-U1- 202005 004 348
- DE-U1- 202009 001 025
- DE-U1- 202010 001 175
- DE-U1- 202010 013 933
- US-B1- 8 839 575

## Beschreibung

Die vorliegende Erfindung betrifft eine Befestigungsvorrichtung zur Befestigung von Solarmodulen an einem Dach. insbesondere kann die Befestigungsvorrichtung zur Befestigung von Solarmodulen an einem Schrägdach dienen. Beispielsweise kann die Befestigungsvorrichtung mit einem Dachsparren einer Dachkonstruktion verbunden werden.

EP 3 623 721 A1 offenbart einen Dachhaken, der mit einem Grundträger verbunden werden kann. Der Dachhaken hat einen Rastfuß, der mit dem Grundträger verrastet werden kann. Der Rastfuß weist ein erstes Rastelement und ein zweites Rastelement auf, die über einen Brückenabschnitt miteinander verbunden sind. Das zweite Rastelement ist gelenkig am Brückenabschnitt gelagert und relativ zum Brückenabschnitt und zum ersten Rastelement verschwenkbar. Das zweite Rastelement weist zwei Schenkel auf. Der Schenkel des zweiten Rastelements kann mit einem relativ zum Brückenabschnitt verschiebbar gelagerten Fixiervorrichtung fixiert werden.

DE 10 2012 213 734 A1 offenbart ein Befestigungselement mit einem Basisteil und einem Hakenteil. Das Hakenteil umfasst einen Verbindungshaken und einen Rastverschluss. Der Rastverschluss wird von einem Steg mit einer Rastnase gebildet. Das Basisteil weist einen Vorsprung auf, der mit dem Rastverschluss an dem Hakenteil in Eingriff gebracht werden kann. Der Verbindungshaken kann an dem Basiselement eingehängt werden. Im Anschluss daran kann das Hakenteil verschwenkt werden, sodass der Rastverschluss an dem Hakenteil den Vorsprung an dem Basisteil hintergreifen kann.

Es ist eine Aufgabe der vorliegenden Erfindung eine Befestigungsvorrichtung zur Befestigung von Solarmodulen bereitzustellen, die schnell und einfach an dem Dach anbringbar und demontierbar ist.

Diese Aufgabe wird mit einer Befestigungsvorrichtung mit den Merkmalen der Patentansprüche 1 und 3 gelöst.

Weitere Ausführungsformen sind in den abhängigen Ansprüchen angegeben.

Die erfindungsgemäße Befestigungsvorrichtung kann schnell und einfach an einem Dach angebracht werden. Die Befestigungsvorrichtung ist so ausgebildet, dass sie mit nur einem einzigen Befestigungsmittel an dem Dach befestigt werden kann. Die Fußplatte kann mit dem Befestigungsmittel, beispielsweise einer Schraube, mit dem Dach verbunden werden. Der wenigstens eine Haken kann schnell und einfach ohne zusätzliches Werkzeug mit der Fußplatte gekoppelt werden.

Der wenigstens eine Haken und die Fußplatte sind derart ausgebildet, dass der wenigstens eine Haken über eine Schwenkbewegung mit der wenigstens einen Fußplatte verrastbar ist. Der zweite Schenkel kann mit der Fußplatte gekoppelt werden. Im Anschluss an die Kopplung mit der Fußplatte kann der zweite Schenkel eine Schwenkbewegung relativ zur Fußplatte ausführen. Durch diese Schwenkbewegung können die Rastformation an der wenigstens einen Rastleiste und die Rastformation an dem wenigstens einen Schenkel miteinander verrastet werden. Der erste Schenkel ist so ausgebildet sein, dass die Rastformation an dem Schenkel mit der Rastformation an der Rastleiste in Eingriff gehalten wird.

Die wenigstens eine Fußplatte kann wenigstens eine Aufnahme für einen Endabschnitt des zweiten Schenkels aufweisen. In die wenigstens eine Aufnahme kann der Endabschnitt des zweiten Schenkels eingehängt werden. Die Aufnahme und/oder der Endabschnitt des zweiten Schenkels können so ausgebildet sein, dass sie einen Schwenkpunkt zum Verschwenken des Hakens bilden. An dem Endabschnitt bzw. an dem freien Ende des zweiten Schenkels kann eine Schwenkfläche vorgesehen sein. Die wenigstens eine Aufnahme kann sich über Teile der Längserstreckung oder über die gesamte Längserstreckung der Fußplatte erstrecken. Die wenigstens eine Aufnahme kann als Aufnahmeschiene ausgebildet sein.

Die wenigstens eine Aufnahme kann wenigstens einen Einhängehaken aufweisen. Der zweite Schenkel kann mit dem wenigstens einen Einhängehaken zur Kopplung mit der wenigstens einen Fußplatte in Eingriff gebracht werden. Die wenigstens eine Aufnahme kann ferner wenigstens eine Stützleiste aufweisen. Die wenigstens eine Stützleiste kann sich abgewinkelt zu Fußplatte erstrecken. Insbesondere kann sich die wenigstens eine Stützleiste unter einem Winkel von 90° zu der Fußplatte erstrecken. Die wenigstens eine Stützleiste kann eine SLT-12992-P-WO-EP gekrümmte Wandfläche aufweisen und/oder gekrümmt in den Boden der Aufnahme übergehen. Die gekrümmten Bereiche der Stützleiste können zum Verschwenken des Hakens mit der gekrümmten Schwenkfläche an dem zweiten Schenkel zusammenwirken. Der wenigstens eine Einhängehaken und die wenigstens eine Stützfläche können zwischen sich den Aufnahmeraum zur Aufnahme des freien Endes des zweiten Schenkels bilden.

Der zweite Schenkel kann wenigstens eine Einhängenase zur Kopplung mit der wenigstens einen Fußplatte aufweisen. Die wenigstens eine Einhängenase kann an dem freien Ende oder einem Endabschnitt des zweiten Schenkels ausgebildet sein. Die wenigstens eine Einhängenase kann an der dem ersten Schenkel abgewandten Seite des zweiten Schenkels, d. h. an der Außenseite des zweiten Schenkels ausgebildet sein. An der dem ersten Schenkel zugewandten Seite des zweiten Schenkels, d. h. an der Innenseite des zweiten Schenkels, kann eine Ausnehmung ausgebildet sein. Mit dieser Ausnehmung kann sich der zweite Schenkel an der wenigstens einen Stützleiste der Aufnahme abstützen.

Die wenigstens eine Rastformation an dem ersten Schenkel und die wenigstens eine Rastformation an der wenigstens einen Rastleiste können komplementär zueinander ausgebildet sein. Die wenigstens eine Rastformation an dem ersten Schenkel und die Rastformation an der wenigstens einen Rastleiste können jeweils wenigstens einen Rastvorsprung aufweisen. Die wenigstens eine Rastformation an dem ersten Schenkel und die Rastformation an der wenigstens einen Rastleiste können jeweils wenigstens eine Rastausnehmung aufweisen.

Die Rastformation an dem ersten Schenkel kann wenigstens eine Schwenknase aufweisen. Die wenigstens eine Schwenknase kann an einem Rastvorsprung ausgebildet sein. Die Rastformation an der wenigstens einen Rastleiste kann eine Einhängenase aufweisen. Die wenigstens eine Einhängenase kann an einer Rastausnehmung ausgebildet sein. Die wenigstens eine Einhängenase kann mit der wenigstens einen Schwenknase in Eingriff gebracht werden. Dadurch kann ein Schwenkpunkt zum Verschwenken des Hakens gebildet werden.

Die wenigstens eine Rastformation kann an der Innenseite der wenigstens einen Rastleiste ausgebildet sein. Die Rastformation kann an der Seite der Rastleiste ausgebildet sein, die der wenigstens einen Aufnahme zugewandt ist. Die wenigstens eine Rastformation an dem ersten Schenkel kann an der dem zweiten Schenkel abgewandten Seite des ersten Schenkels, d. h. an der Außenseite des ersten Schenkels, ausgebildet sein. Die Rastformation an dem ersten Schenkel kann an einem Endabschnitt des ersten Schenkels ausgebildet sein. Anders ausgedrückt kann die Rastformation an dem ersten Schenkel im Bereich oder nahe des freien Endes des ersten Schenkels ausgebildet sein. Zusätzlich oder alternativ ist es auch denkbar, dass wenigstens eine Rastformation an der Außenseite der Rastleiste vorgesehen ist. In diesem Fall kann wenigstens eine Rastformation an der Innenseite eines der Schenkel vorgesehen sein.

Die wenigstens eine Rastleiste kann sich abgewinkelt zu der wenigstens einen Fußplatte erstrecken. Die wenigstens eine Rastleiste kann sich im Wesentlichen unter einem Winkel von 90° zu der Fußplatte erstrecken. Die wenigstens eine Rastleiste kann einstückig mit der wenigstens einen Fußplatte ausgebildet sein.

Die wenigstens eine Rastformation an dem ersten Schenkel kann wenigstens eine Rastnase aufweisen. Die wenigstens eine Rastformation an dem ersten Schenkel kann wenigstens eine Führungsschräge aufweisen. Die wenigstens eine Führungsschräge kann sich zwischen dem freien Ende des ersten Schenkels und der Rastnase erstrecken.

Die wenigstens eine Rastformation an der wenigstens einen Rastleiste kann wenigstens eine Rastnase aufweisen. Die wenigstens eine Rastformation an der wenigstens einen Rastleiste kann eine Führungsschräge aufweisen. Die wenigstens eine Führungsschräge kann sich zwischen dem freien Ende der Rastleiste und der Rastnase erstrecken. Die Führungsschräge an der Rastleiste ist länger als die Führungsschräge an dem ersten Schenkel. Die Führungsschräge an dem ersten Schenkel und die Führungsschräge an der Rastleiste können zum Verrasten der Rastformationen des ersten Schenkels und der Rastleiste zusammenwirken. Beim Verrasten der Rastformationen des ersten Schenkels und der Rastformation der Rastleiste kann die Führungsschräge an dem ersten Schenkel an der Führungsschräge der Rastleiste abgleiten. Dadurch kann erste Schenkel elastisch ausgelenkt werden, bevor die Rastformation an dem ersten Schenkel in die Rastformation an der Rastleiste einrastet.

Die wenigstens eine Fußplatte und der wenigstens eine Haken können derart ausgebildet sein, dass der Haken in unterschiedlichen Höhen an der Fußplatte anbringbar ist. Dadurch kann der Abstand zwischen dem Haken und dem Dach eingestellt werden, an dem die Befestigungsvorrichtung angebracht werden soll. Zur Einstellung der unterschiedlichen Höhen sind keine Werkzeuge notwendig. Darüber hinaus müssen an dem Haken und/oder der Fußplatte keine beweglichen Teile vorgesehen werden, um die Höhe des Hakens einstellen zu können.

Die Fußplatte kann wenigstens eine erste Rastleiste und wenigstens eine zweite Rastleiste aufweisen. Beide Rastleisten können wenigstens eine Rastformation aufweisen. Die Rastformationen können an den einander zugewandten Seiten der ersten Rastleiste und der zweiten Rastleisten ausgebildet sein. Anders ausgedrückt können die Rastformationen an den Innenseiten der beiden Rastleisten ausgebildet sein.

Der zweite Schenkel kann eine Rastformation aufweisen. Die Rastformation kann an der dem ersten Schenkel abgewandten Seite des zweiten Schenkels, d. h. an der Außenseite des zweiten Schenkels, ausgebildet sein. Die Rastformation an dem zweiten Schenkel kann an dem freien Ende des zweiten Schenkels ausgebildet sein. Die Rastformation an dem ersten Schenkel kann mit der Rastformation an der ersten Rastleiste und die Rastformation an dem zweiten Schenkel kann mit der Rastformation an der zweiten Rastleiste gekoppelt werden.

Die Fußplatte kann eine Längsachse aufweisen. Die Fußplatte kann derart ausgebildet sein, dass die Position des Hakens entlang der Längsachse der Fußplatte innerhalb der Längserstreckung bzw. innerhalb der axialen Erstreckung der Fußplatte frei wählbar ist. Die wenigstens eine Rastleiste kann derart ausgebildet sein, dass die Position des Hakens zur Verrastung mit der Rastleiste entlang der Längsachse der Fußplatte frei wählbar ist.

Die Fußplatte kann wenigstens eine Befestigungsöffnung aufweisen. Die Fußplatte kann mehrere Befestigungsöffnungen aufweisen. Die Befestigungsöffnungen können entlang der Längsachse der Fußplatte zueinander versetzt an der Fußplatte ausgebildet sein. Die Befestigungsöffnungen können auf der Längsachse der Fußplatte liegen. Durch die Befestigungsöffnungen kann die Befestigungsposition der Fußplatte an einem Sparren eingestellt werden. In Abhängigkeit der ausgewählten Befestigungsöffnung kann die Befestigungsposition der Fußplatte an dem Sparren verändert werden. Insbesondere kann die Befestigungsposition der Fußplatte in einer Richtung parallel zur Längsachse einer Dachlatte verändert werden. Die Längsachse der Fußplatte und die Längsachse der Dachlatte können im Wesentlichen parallel zueinander verlaufen. Die wenigstens eine Rastleiste kann sich parallel zur Längsachse der Fußplatte erstrecken.

Durch die freie Wählbarkeit der Position des Hakens an der Fußplatte und durch die Einstellbarkeit der Befestigungsposition der Fußplatte an dem Sparren kann die Position des Hakens relativ zum Sparren und/oder relativ zu einer Dachlatte in einem vorbestimmten Bereich stufenlos eingestellt werden.

Die Befestigungsvorrichtung kann mit einem einzigen Befestigungselement an dem Sparren befestigt werden. Das Befestigungselement kann beispielsweise eine Schraube sei. Mit anderen Worten kann die Befestigungsvorrichtung, d. h. der Haken und die Fußplatte, so ausgebildet sein, dass ein einziges Befestigungselement zur Befestigung der Befestigungsvorrichtung an einem Sparren ausreicht.

Die Fußplatte hat eine Oberseite und eine Unterseite. An der Oberseite der Fußplatte kann die wenigstens eine Rastleiste und/oder die wenigstens eine Aufnahme vorgesehen sein. Die Unterseite der Fußplatte kann mit dem Sparren in Kontakt kommen.

Die wenigstens eine Fußplatte kann an ihrer Unterseite wenigstens ein vorstehendes Element aufweisen. Das wenigstens eine vorstehende Element kann einen Vorsprung, eine Rippe, einen Steg oder eine Leiste umfassen. Bei der Befestigung der Fußplatte mit einem Befestigungselement wird das wenigstens eine vorstehende Element in den Sparren gedrückt und kann die Fußplatte in Position halten. Da die Fußplatte mit dem wenigstens einen vorstehenden Element seine Position halten kann und insbesondere gegen ein Verdrehen gesichert ist, kann ein einziges Befestigungselement zur Befestigung der Fußplatte an dem Sparren ausreichen.

Das wenigstens eine vorstehende Element kann sich über die gesamte Längserstreckung der Fußplatte erstrecken. Es ist jedoch auch denkbar, dass sich das wenigstens eine vorstehende Element nur über Teile der Längserstreckung der Fußplatte erstreckt. Die wenigstens eine Fußplatte kann an ihrer Unterseite mehrere sich in Längsrichtung erstreckende vorstehende Elemente aufweisen.

Die wenigstens eine Befestigungsvorrichtung kann wenigstens eine Montageplatte. Die wenigstens eine Montageplatte kann als Höhenausgleich dienen. Dies kann beispielsweise dann der Fall sein, wenn mehrere Befestigungsvorrichtungen zur Befestigung eines Solarmoduls verwendet werden und Höhenunterschiede zwischen den aufweisen Haken der jeweiligen Befestigungsvorrichtungen vorliegen können. Die wenigstens eine Montageplatte kann sich an die Unterseite der Fußplatte anlegen. Die wenigstens eine Montageplatte kann sich zwischen der Fußplatte und dem Sparren befinden. Die wenigstens eine Montageplatte kann ein vorbestimmtes Lochmuster aufweisen. Es können mehrere Montageplatten vorgesehen sein, die unterschiedliche Dicken aufweisen können. Dadurch können unterschiedliche Höhenunterschiede ausgeglichen werden. Die wenigstens eine Montageplatte kann an ihrer Unterseite wenigstens ein vorstehendes Element aufweisen. Die Unterseite der Montageplatte kann mit einem Sparren in Kontakt kommen. Das vorstehende Element kann bei der Befestigung der Fußplatte in den Sparren gedrückt werden.

Im Folgenden werden beispielhafte Ausführungsformen der Erfindung mit Bezug auf die Figuren beschrieben. Es stellen dar:
- Figuren 1 bis 12: Ansichten einer Befestigungsvorrichtung gemäß einer ersten Ausfüh-rungsform, und
- Figuren 13 bis 26: Ansichten einer Befestigungsvorrichtung gemäß einer zweiten Ausführungsform.

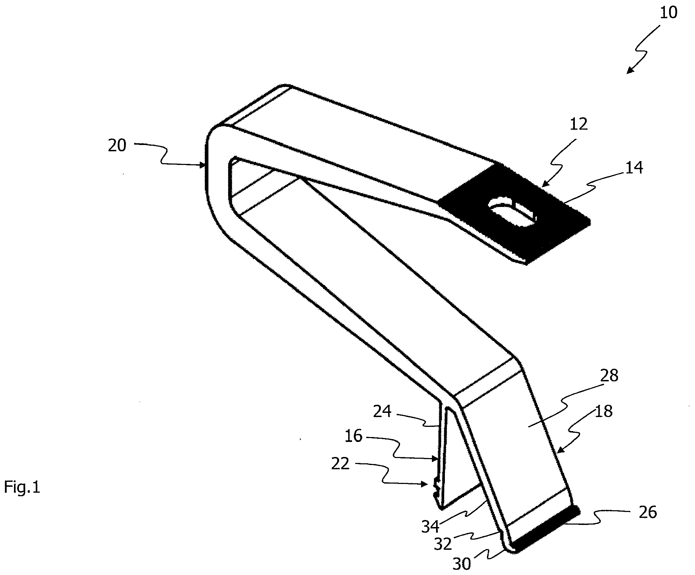

Figur 1 zeigt eine perspektivische Ansicht eines Hakens 10, der Teil einer Befestigungsvorrichtung zur Befestigung von Solarmodulen an einem Dach ist. Der Haken 10 weist einen Befestigungsabschnitt 12 auf, an dem eine Montageschiene für ein Solarmodul angebracht werden kann. Der Befestigungsabschnitt 12 hat eine Öffnung 14, die langlochförmig ausgebildet ist. Durch die Öffnung 14 kann ein Befestigungselement geführt werden, um den Haken 10 mit der Montageschiene (nicht gezeigt) zu verbinden. Die Oberfläche des Befestigungsabschnitts 14 kann mit einer Riffelung versehen sein.

Der Haken 10 hat einen ersten Schenkel 16 und einen zweiten Schenkel 18. Die Schenkel 16 und 18 verlaufen abgewinkelt zueinander. Der Haken 10 weist ferner einen Verbindungsabschnitt 20 auf, der den Befestigungsabschnitt 12 mit den Schenkeln 16, 18 verbindet. Der Verbindungsabschnitt 20 erstreckt sich zwischen den Schenkeln 16, 18 und dem Befestigungsabschnitt 12 U- oder V-förmig. Der Befestigungsabschnitt 12 befindet sich durch den beschriebenen Verlauf des Verbindungsabschnitt 20 oberhalb der Schenkel 16, 18.

Der Schenkel 16 weist eine Rastformation 22 auf. Die Rastformation 22 befindet sich an der dem Schenkel 18 abgewandten Seite 24 des Schenkels 16. Die Seite 24 des Schenkels 16 kann auch als Außenseite des Schenkel 16 bezeichnet werden. Die Rastformation 22 ist an einem Endabschnitt bzw. im Bereich des freien Endes des Schenkel 16 angeordnet.

Der Schenkel 18 weist eine Einhängenase 26 auf. Die Einhängenase 26 ist an dem freien Ende des Schenkels 18 ausgebildet. Die Einhängenase 26 ist an der dem Schenkel 16 abgewandten Seite 28 des Schenkels 18, d. h. an der Außenseite des Schenkels 18 vorgesehen. An dem freien Ende des Schenkels 18 ist ferner eine gekrümmte Schwenkfläche 30 vorgesehen, die mit einem nicht gezeigten Fußplatte der Befestigungsvorrichtung in Kontakt kommen kann. An dem Schenkel 18 ist ferner eine Ausnehmung 32 ausgebildet, die sich an der dem Schenkel 16 zugewandten Seite 34 des Schenkels 18, d. h. an der Innenseite des Schenkels 18 befindet. Die gekrümmte Schwenkfläche 30 erstreckt sich von der Einhängenase 26 zur Innenseite 34 des Schenkels 18.

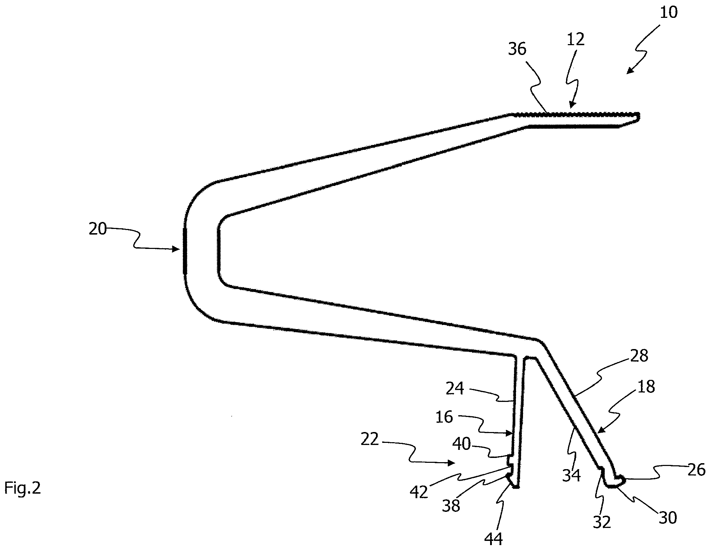

Figur 2 zeigt eine Seitenansicht des Hakens 10. Der Befestigungsabschnitt 12 hat an seiner Oberseite 36 eine Riffelung, d. h. an der von den Schenkeln 16, 18 abgewandten Seite. Aufgrund des U- oder V-förmigen Verlaufs des Verbindungsabschnitt 20 befindet sich der Befestigungsabschnitt 12 oberhalb der Schenkel 16, 18. Mit anderen Worten sind der Befestigungsabschnitt 12 und die Schenkel 16, 18 an den freien Enden der U- oder V-Form angeordnet.

Die Rastformation 22 ist an der Außenseite 24 des Schenkels 16 ausgebildet. Die Rastformation 22 wird von einer Rastnase 38 und einem Rastvorsprung 40 gebildet. Der Rastvorsprung 40 und die Rastnase 38 legen zwischen sich eine Rastausnehmung 42 fest. An die Rastnase 38 schließt sich eine Führungsschräge 44 an, die sich zu dem freien Ende des Schenkels 16 erstreckt.

Der Schenkel 18 hat an seinem freien Ende an der Außenseite 28 die Einhängenase 26. Ausgehend von der Einhängenase 26 erstreckt sich eine gekrümmte Schwenkfläche 30 an dem freien Ende des Schenkels 18 zur Innenseite 34 des Schenkels 18. An der Innenseite 34 des Schenkels 18 ist die Ausnehmung 32 vorgesehen. Der erste Schenkel 16 ist dünner bzw. mit einer geringeren Materialstärke als der zweite Schenkel 18 ausgebildet. Dadurch kann eine Elastizität oder Auslenkbarkeit des ersten Schenkel 16 erreicht werden. Diese Elastizität kann eine Vorspannung erzeugen, die den Schenkel 16 in seiner verrasteten Position halten kann.

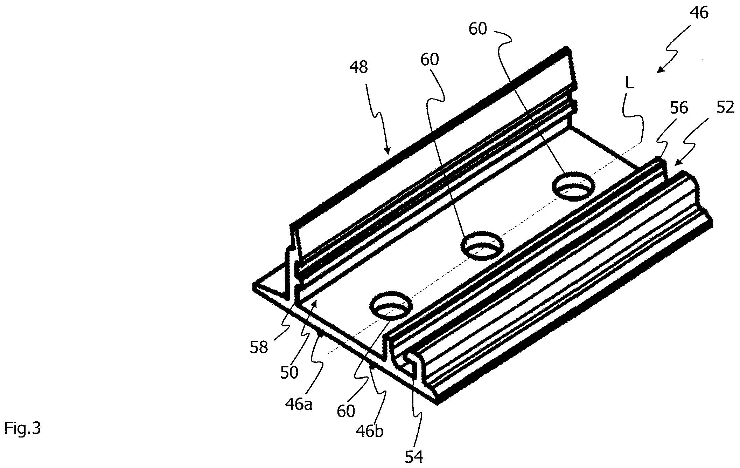

Figur 3 zeigt eine perspektivische Ansicht einer Fußplatte 46. Die Fußplatte 46 weist eine Längsachse L auf. Die Fußplatte 46 weist eine Rastleiste 48 auf. Die Rastleiste 48 hat eine Rastformation 50. Die Rastformation 50 kann mit der Rastformation 22 an dem Schenkel 16 des Hakens 10 (siehe Figuren 1 und 2) verrastet werden. An der Fußplatte 46 ist ferner eine Aufnahme 52 für das freie Ende des Schenkels 18 ausgebildet. Die Aufnahme 52 hat einen Einhängehaken 54 und eine Stützleiste 56. Der Einhängehaken 54 und die Stützleiste 56 legen zwischen sich einen Aufnahmeraum für das freie Ende des Schenkels 18 fest. Die Rastformation 50 ist an der Seite 58 der Rastleiste 48 ausgebildet, die der Aufnahme 52 zugewandt ist, d. h. an der Innenseite der Rastleiste 48. Zwischen der Rastleiste 48 und der Aufnahme 52 sind an der Fußplatte 46 Befestigungsöffnungen 60 ausgebildet. Die Fußplatte 46 weist gemäß dieser Ausführungsform drei Befestigungsöffnungen 60 auf. Die Befestigungsöffnungen 60 sind in entlang der Längsachse L versetzt zueinander an der Fußplatte 46 ausgebildet. Mit den Befestigungsöffnungen 60 kann die Fußplatte 46 an einer Dachkonstruktion oder einem Dachaufbau (nicht gezeigt) befestigt werden. Durch die Befestigungsöffnungen 60 kann die Befestigungsposition der Fußplatte 46 an einem Dachsparren (nicht gezeigt) in Abhängigkeit der zur Befestigung ausgewählten Befestigungsöffnungen 60 verändert werden.

Die Rastleiste 48 und die Aufnahme 52 sind an der Oberseite der Fußplatte 46 angeordnet. Die Unterseite der Fußplatte 46 kann mit einem Sparren (nicht gezeigt) in Kontakt kommen. Die Fußplatte 46 weist an ihrer Unterseite zwei Rippen 46a und 46b auf. Bei der Befestigung der Fußplatte 46 werden die beiden Rippen 46a und 46b in den Sparren gedrückt. Mit den Rippen 46a und 46b kann die Fußplatte 46 in ihrer Position an dem Sparren (nicht gezeigt) gehalten und insbesondere gegen ein Verdrehen gesichert werden.

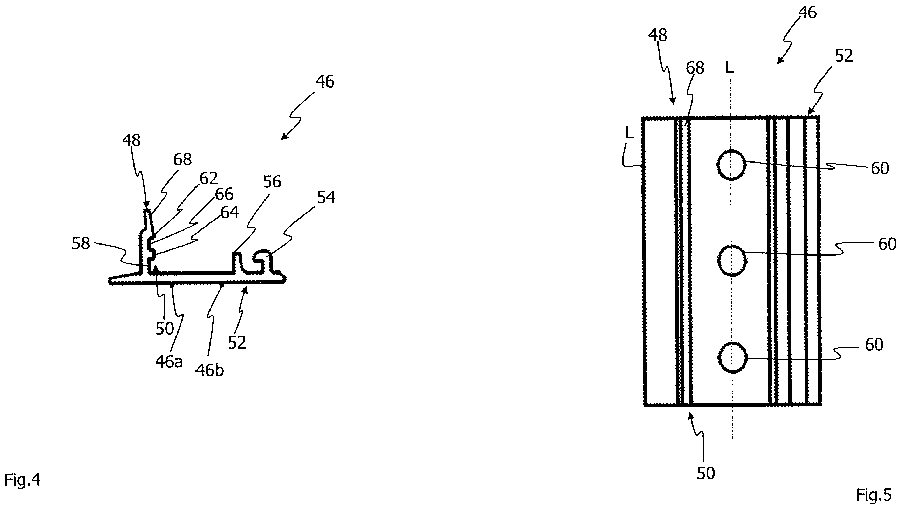

Figuren 4 und 5 zeigen eine Seitenansicht und eine Draufsicht der Fußplatte 46. An der Unterseite der Fußplatte 46 sind die vorstehenden Rippen 46a auf 46b ausgebildet. Die Fußplatte 46 hat die Rastleiste 48 und die Aufnahme 52. Die Rastleiste 48 erstreckt sich im wesentlichen unter einem Winkel von 90° zur Fußplatte 46. An der Innenseite 58 der Rastleiste 48 ist an der Rastformation 50 ausgebildet. Die Rastformation 50 wird von einer Rastnase 62 und einem Rastvorsprung 64 gebildet, die zwischen sich eine Rastausnehmung 66 festlegen. Zwischen der Rastnase 62 und dem freien Ende der Rastleiste 48 erstreckt sich eine Führungsschräge 68. Die Rastleiste 48 und die Aufnahme 52 erstrecken sich parallel zur Längsachse L der Fußleiste 46.

Die Aufnahme 52 wird von dem Einhängehaken 54 und der Stützleiste 56 gebildet. Der Einhängehaken 54 weist in Richtung der Stützleiste 56. Der Einhängehaken 54 und die Stützleiste definieren zwischen sich einen Aufnahmeraum für das freie Ende des Schenkels 18 des Hakens 10.

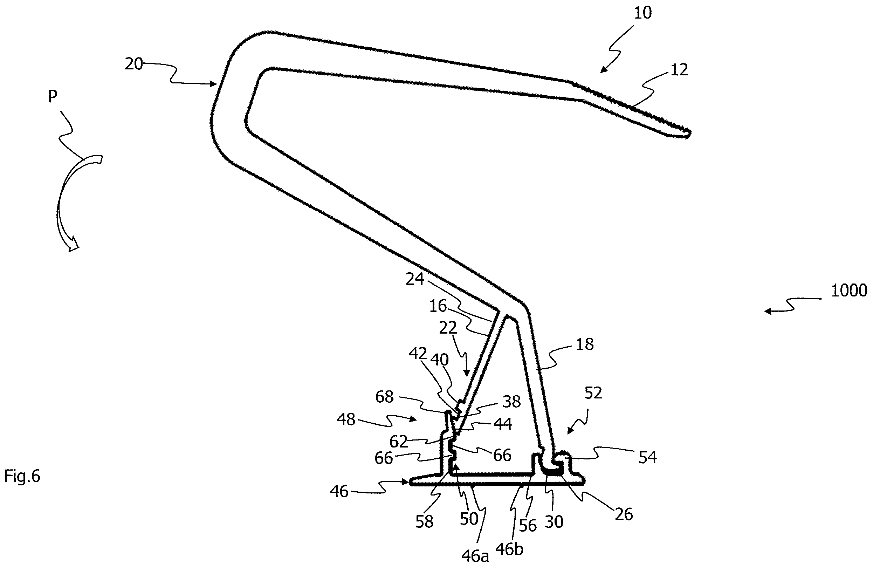

Figur 6 zeigt eine Ansicht der Befestigungsvorrichtung 1000, die den Haken 10 und die Fußplatte 46 umfasst. Der Schenkel 18 des Hakens 10 wird mit seinem freien Ende in die Aufnahme 52 eingesetzt. Die Einhängenase 26 hintergreift dabei den Einhängehaken 54 der Aufnahme 52. Die Schwenkfläche 30 kommt mit dem Boden der Aufnahme 52 und der Stützleiste 56 in Kontakt. Die Führungsschräge 44 an dem freien Ende des Schenkels 16 liegt an der Führungsschräge 68 an dem freien Ende der Rastleiste 48 an.

Figur 6 zeigt die Situation des Hakens 10 und der Fußplatte 46 kurz bevor die Rastformation 22 an dem Schenkel 16 mit der Rastformation 50 an der Rastleiste 48 verrastet wird. Um die Rastformationen 22 und 50 miteinander verrasten zu können, wird der Haken 10 weiter in Richtung des Pfeils P verschwenkt, bis die Rastnase 38 den Rastvorsprung 66 an der Rastleiste 48 hintergreift. Im verrasteten Zustand ist der Rastvorsprung 40 in der Rastausnehmung 66 der Rastleiste 48 aufgenommen.

Die Kopplung des Hakens 10 mit der an einem Dachaufbau (nicht gezeigt) angebrachten Fußplatte 46 erfolgt folgendermaßen. Das freie Ende des Schenkels 18 wird mit der Einhängenase 46 in die Aufnahme 52 eingesetzt. Die Schwenkfläche 30 kontaktiert die Stützleiste 56 und den Boden der Aufnahme 52. Durch eine Schwenkbewegung in Richtung des Pfeils P wird der Schenkel 16 mit der Rastleiste 48 in Kontakt gebracht. Dabei werden die Rastformation 22 an dem Schenkel 16 und die Rastformation 50 an der Innenseite 58 der Rastleiste 48 miteinander verrastet. Der Haken 10 ist dann fest mit der Fußplatte 46 verbunden.

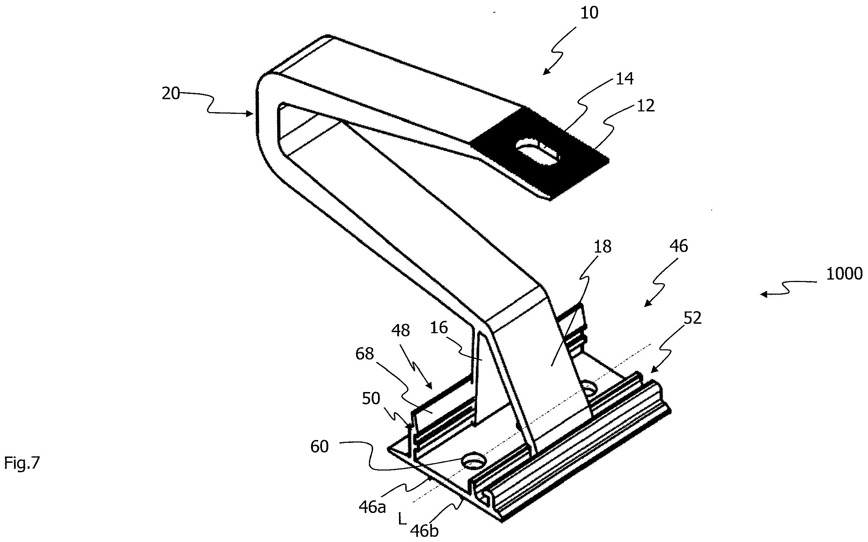

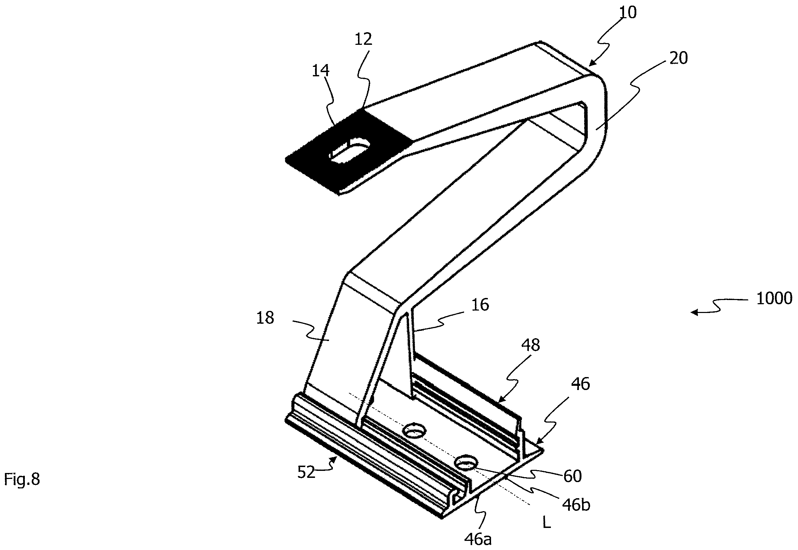

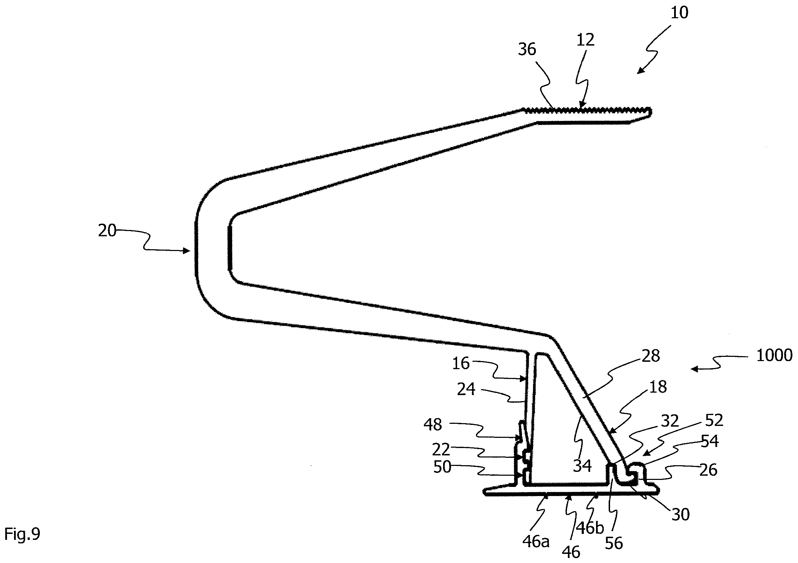

Die Figuren 7 bis 9 zeigen verschiedene Ansichten der Befestigungsvorrichtung 1000, in denen der Haken 10 fest mit der Fußplatte 46 verbunden ist. Zur Verbindung des Hakens 10 mit der Fußplatte 46 wird das freie Ende des Schenkels 18 in die Aufnahme 52 eingesetzt, wobei die Einhängenase 26 den Haken 54 hintergreift. Die Aufnahme 52 an der Fußplatte 46 bildet zusammen mit dem freien Ende des Schenkels 18 und der Schwenkfläche 30 den Schwenkpunkt, um den der Haken 10 verschwenkt werden kann. Der Haken 10 wird um diesen Schwenkpunkt verschwenkt, sodass die Rastformation 22 an der Außenseite 24 des Schenkels 16 mit der Rastformation 50 an der Innenseite der Rastleiste 48 verrastet werden kann. Im verrasteten Zustand greift die Stützleiste 56 in die Ausnehmung 32 an der Innenseite 34 des Schenkels 18 ein. Die Innenseite des Schenkels 34 liegt somit abschnittsweise an der Stützleiste 56 an. Der Haken 10 stützt sich an der Stützleiste 56 ab. Durch die Stützleiste 56 kann auch eine Vorspannung in den Haken 10 eingebracht werden, durch die die Rastformationen 22 und 50 in Eingriff miteinander gehalten werden. Die Position des Hakens 10 an der Fußplatte 46 ist entlang der Längsachse L der Fußplatte 46 frei wählbar. Dies wird insbesondere bei einem Vergleich der Figuren 7 und 8 deutlich. In Figur 7 befindet sich der Haken 10 in einem mittleren Bereich der Fußplatte 46. In Figur 8 befindet sich der Haken 10 an dem in Figur 8 linken Ende der Fußplatte 46. Durch die Wählbarkeit der Position des Hakens 10 an der Fußplatte 46 kann die Befestigungsvorrichtung 1000 kann die Montage der Befestigungsvorrichtung und die Befestigung der Befestigungsvorrichtung 1000 an einem Dach (nicht gezeigt) erleichtert werden.

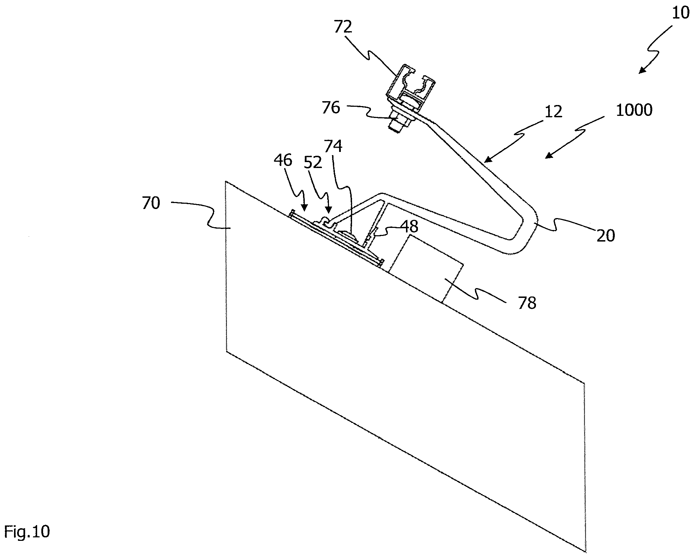

Figur 10 zeigt eine Ansicht der Befestigungseinrichtung 1000 im an einem Sparren 70 einer Dachkonstruktion angebrachten Zustand. An der Montageschiene 72 kann der Rahmen eines Solar-Modules angebracht werden. Die Fußplatte 46 der Befestigungsvorrichtung 1000 ist über ein Befestigungselement 74 mit der Dachkonstruktion 70 verbunden. Der Haken 10 ist mit der Fußplatte 46 gekoppelt. An dem Befestigungsabschnitt 12 des Hakens 10 ist über ein Befestigungselement 76 an der Montageschiene 72 angebracht.

Der Verbindungsabschnitt 20 des Hakens 10 zeigt in Richtung der Neigung des Sparrens 70 nach unten. Die Fußplatte 46 ist so an der Dachkonstruktion 70 angebracht, dass sich in Richtung der Neigung des Sparrens 70 die Aufnahme 52 am oberen Ende und die Rastleiste 48 am unteren Ende der Fußplatte 46 befindet. Die Fußplatte 46 ist oberhalb einer Dachlatte 78 an dem Sparren 70 angebracht. In einer Richtung senkrecht zum Sparren 70 erstreckt sich der Verbindungsabschnitt 20 des Hakens 10 über der Dachlatte 78. Mit dem Haken 10 bzw. dessen Verbindungsabschnitt 20 kann ein vorbestimmter Abstand in einer Richtung senkrecht zum Sparren 70 zwischen dem Sparren 70 und/oder der Dachlatte 78 eingestellt werden. Die Montageschiene 72 erstreckt sich parallel zur Dachlatte 78.

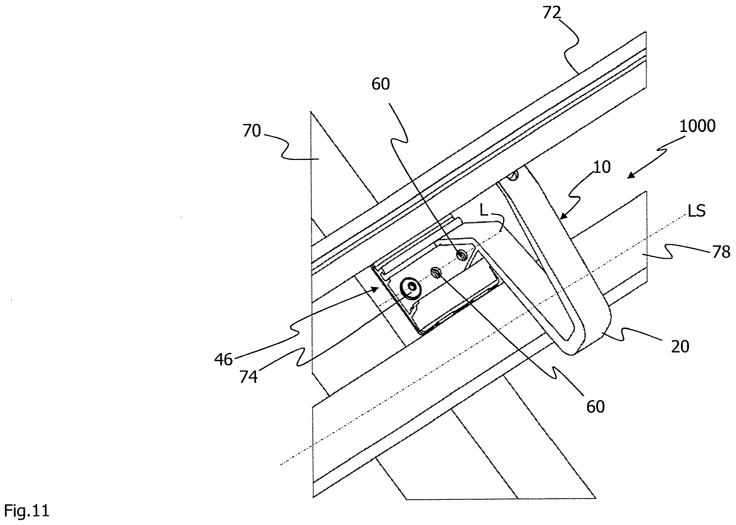

Figur 11 zeigt eine perspektivische Ansicht der Befestigungsvorrichtung 1000 im an dem Sparren 70 angebrachten Zustand. Die Fußplatte 46 der Befestigungsvorrichtung 1000 ist oberhalb der Dachlatte 78 an dem Sparren 70 angebracht. Die Fußplatte 46 und damit die Befestigungsvorrichtung 1000 können nur mit einem einzigen Befestigungselement 74, d. h. mit einer einzigen Schraube, an dem Sparren 70 befestigt werden. Aufgrund der Befestigungsöffnungen 60 kann die Fußplatte 46 entlang der Längsachse LS der Dachlatte 78 in verschiedenen Positionen montiert werden. Da die Position des Hakens 10 an der Fußplatte 46 entlang der Längsachse L der Fußplatte 46 frei gewählt werden kann, kann die Befestigungsposition der Befestigungsvorrichtung 1000 bzw. des Hakens 10 an dem Sparren 70 in einem vorbestimmten Bereich eingestellt werden. Dieser vorbestimmte Bereich wird zum einen durch die Befestigungsöffnungen 60 und zum anderen durch die Längserstreckung der Fußplatte 46 definiert. Es kann somit eine stufenlose Einstellung der Position des Hakens 10 erreicht werden. Die Position des Hakens 10 kann beispielsweise in Abhängigkeit der Dimensionen der verwendeten Dachziegel (nicht gezeigt) eingestellt werden.

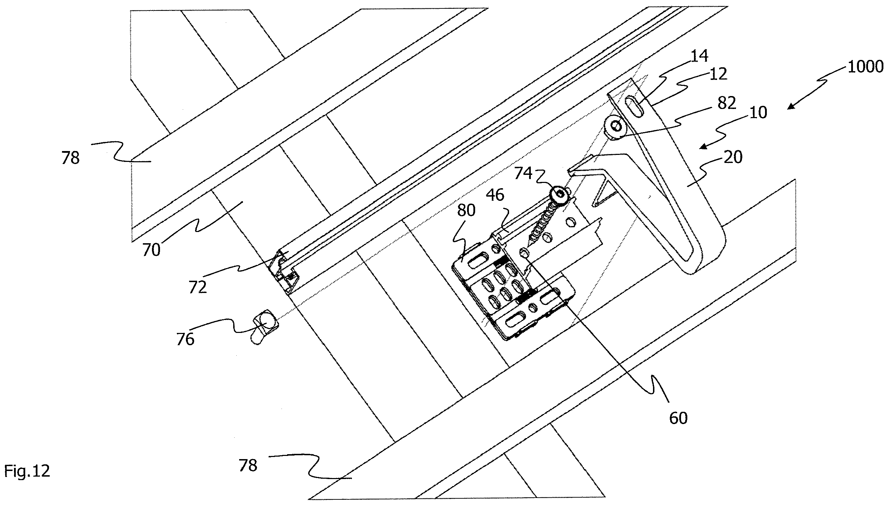

Figur 12 zeigt eine Explosionsdarstellung der Befestigungsvorrichtung 1000. Die Befestigungsvorrichtung 1000 weist eine Montageplatte 80 auf. Die Montageplatte 80 hat ein vorbestimmtes Lochmuster mit mehreren Öffnungen, durch die sich Befestigungselemente erstrecken können. Die Montageplatte 80 ist mit der Fußplatte 46 koppelbar und kann zusammen mit der Fußplatte 46 an dem Sparren 70 befestigt werden. Die Montageplatte 80 und die Fußplatte 46 werden mit der Schraube 74 an dem Sparren 70 befestigt. Die Schraube 74 ist die einzige Schraube, die zur Befestigung der Befestigungsvorrichtung 1000 an dem Sparren 70 benötigt wird. Die Schraube 74 hält die Befestigungsvorrichtung 1000 an dem Sparren 70. Die Schraube 74 wurde in die in Figur 11 durch die Schraube 74 verdeckte Befestigungsöffnung 60 eingesetzt. Die Schraube 74 befindet sich somit in der in Figur 11 linken Befestigungsöffnung 60. Die weiteren Befestigungsöffnungen 60 sind in Figur 11 erkennbar. Mit der Montageplatte 80 können Höhenunterschiede zwischen dem Sparren 70 und dem Haken 10 ausgeglichen werden. Dies gilt insbesondere dann, wenn mehrere Befestigungsvorrichtungen 1000 zur Befestigung eines Solar-Modules verwendet werden. Derartige Höhenunterschiede zwischen den einzelnen Befestigungsvorrichtungen 1000 können über eine oder mehrere Montageplatte 80 ausgeglichen werden.

Zur Befestigung der Fußplatte 46 an dem Sparren 70 wird die Schraube 74 durch eine der Befestigungsöffnungen 60 in der Fußplatte 46 und eine Öffnung in der Montageplatte 80 geführt und mit dem Sparren 70 verschraubt. Die Fußplatte 46 und die Montageplatte 80 werden zwischen zwei Dachlatten 78 an dem Sparren 70 angebracht. Wenn die Fußplatte 46 an dem Sparren 70 befestigt ist, wird der Haken 10 in die Fußplatte 46 eingehängt und mit dieser verrastet. Die Befestigungsbolzen 76 können in die Montageschiene 72 eingesetzt und bis zur Position des Hakens 10 verschoben werden. Die Befestigungsbolzen 76 können durch die Öffnung 14 geführt und mit der Mutter 82 verschraubt werden. Alternativ zu dieser Vorgehensweise kann der Befestigungsbolzen 76 in die Öffnung 14 an dem Befestigungsabschnitt 12 des Hakens 10 eingesetzt und über die Mutter 82 vorläufig an dem Haken 10 gesichert. Im Anschluss daran wird die Montageschiene 72 auf den Befestigungsbolzen 76 aufgeschoben. Dann wird die Mutter 80 angezogen und die Montageschiene 72 ist fest mit dem Haken 10 bzw. der Befestigungseinrichtung 1000 verbunden.

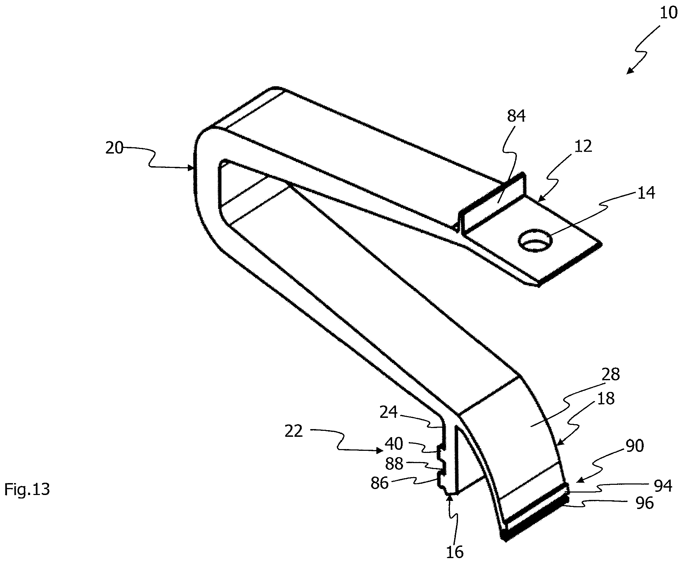

Figur 13 zeigt eine perspektivische Ansicht eines Hakens 10 gemäß einer weiteren Ausführungsform. Der Haken 10 weist den Befestigungsabschnitt 12, die Schenkel 16, 18 und den Verbindungsabschnitt 20 auf, der den Befestigungsabschnitt 20 mit den Schenkeln 16, 18 verbindet. Der Befestigungsabschnitt 12 hat die Öffnung 14 und einen Anlageabschnitt 84.

An der Außenseite 24 des Schenkel 16 ist die Rastformation 22 ausgebildet. Die Rastformation 22 weist Rastvorsprünge 40 und 86 auf, die zwischen sich eine Rastausnehmung 88 festlegen. Auch an der Außenseite 28 des Schenkels 18 ist eine Rastformation 90 ausgebildet. Die Rastformation 90 ist im Bereich des freien Endes des Schenkels 18 vorgesehen. Die Rastformation 90 wird von zwei Rastvorsprüngen 94 und 96 gebildet, die zwischen sich eine nicht erkennbare Rastausnehmung festlegen.

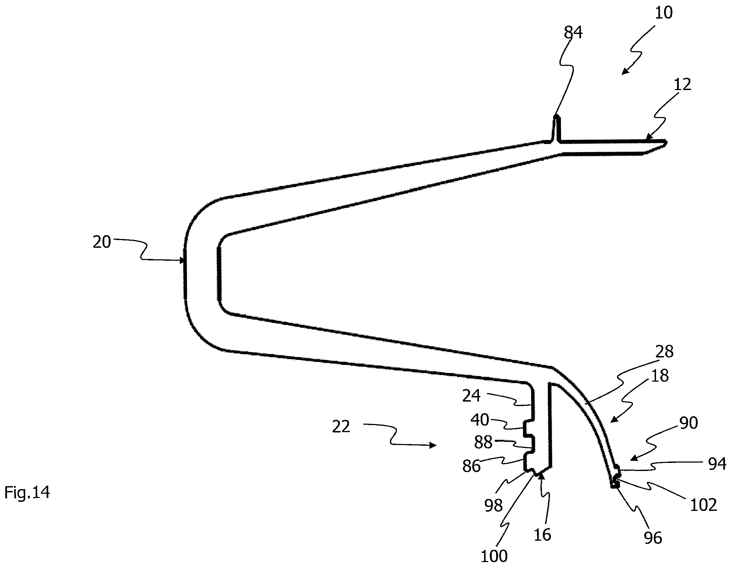

Figur 14 zeigt eine Seitenansicht des Hakens 10. An dem in Figur 14 unteren Rastvorsprung 86 ist eine Schwenknase 98 ausgebildet. Die Schwenknase 98 ist an der von dem Rastvorsprung 40 abgewandten Seite des Rastvorsprungs 86 ausgebildet. An die Schwenknase 98 schließt sich eine schräge Anlagefläche 100 an, die sich bis zum Ende des Schenkels 16 erstreckt.

Der Schenkel 18 hat die Rastformation 90, die an seine Außenseite 28 ausgebildet ist. Die Rastformation 90 weist zwei Rastvorsprünge 94 und 96 auf, die zwischen sich die Rastausnehmung 102 festlegen. Der Schenkel 18 ist gekrümmt ausgebildet. Der zweite Schenkel 18 ist dünner bzw. mit einer geringeren Materialstärke als der erste Schenkel 16 ausgebildet. Dadurch kann eine Elastizität des zweiten Schenkels 18 erreicht werden, die den zweiten Schenkel 18 in seine verrastete Position vorspannen kann.

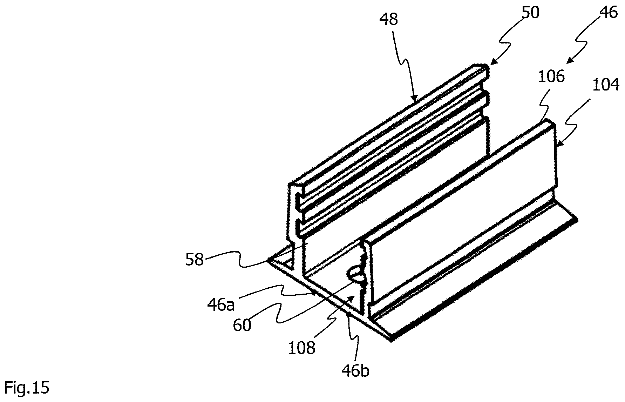

Figur 15 zeigt eine perspektivische Ansicht einer Fußplatte 46 gemäß der zweiten Ausführungsform. Die Fußplatte 46 weist eine erste Rastleiste 48 und eine zweite Rastleiste 104 auf. Die erste Rastleiste 48 hat an ihrer der zweiten Rastleiste 104 zugewandten Seite 58, d. h. an der Innenseite, die Rastformation 50. Die zweite Rastleiste 104 hat an ihrer der ersten Rastleiste 48 zugewandten Seite 106 eine Rastformation 108. Zwischen den beiden Rastleiste 48 und 104 ist eine Befestigungsöffnung 60 in der Fußplatte 46 erkennbar.

Die Rastleiste 48 und die Aufnahme 52 sind an der Oberseite der Fußplatte 46 angeordnet. Die Unterseite der Fußplatte kann mit einem Sparren (nicht gezeigt) in Kontakt kommen. Die Fußplatte 46 weist an ihrer Unterseite zwei Rippen 46a und 46b auf. Bei der Befestigung der Fußplatte 46 werden die beiden Rippen 46a und 46b in den Sparren gedrückt. Mit den Rippen 46a und 46b kann die Fußplatte 46 in ihrer Position an dem Sparren (nicht gezeigt) gehalten und insbesondere gegen ein Verdrehen gesichert werden.

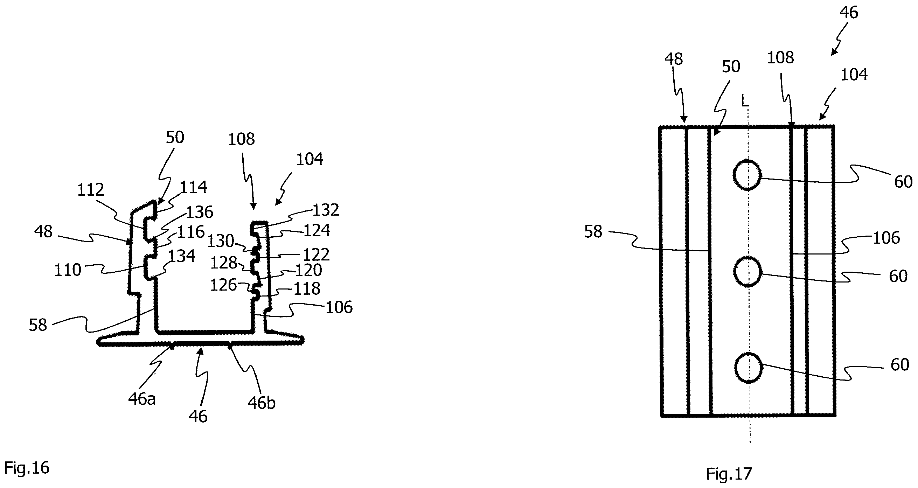

Figur 16 zeigt eine Seitenansicht der Fußplatte 46. An der Unterseite der Fußplatte 46 sind die vorstehenden Rippen 46a und 46b ausgebildet. Die Rastleiste 48 und die Rastleiste 104 haben einander gegenüberliegende Rastformationen 50 und 108. Die Rastformation 50 der Rastleiste 48 weist Rastausnehmungen 110, 112 und Rastvorsprünge 114 und 116 auf. Die Rastformation 108 der Rastleiste 104 hat Rastausnehmungen 118, 120, 122 und 124. Zudem hat die Rastformation 108 Rastvorsprünge 126, 128, 130 und 132. Die Rastausnehmungen 118 und 122 sind identisch ausgebildet, aber in ihrer Position an der Rastleiste 104 zueinander versetzt. Die Rastausnehmungen 120 und 124 sind ebenfalls identisch und versetzt zueinander an der Rastleiste 104 ausgebildet. Die Rastvorsprünge 126 und 130 sind identisch ausgebildet, aber in ihrer Position an der Rastleiste 104 zueinander versetzt.

Die Rastausnehmungen 110, 112 haben Einhängenasen 134, 136 an ihren unteren Endbereichen. Die Einhängenasen 134, 136 können mit der Schwenknase 98 an dem Haken 10 in Eingriff gebracht werden. Eine der Einhängenase 134 oder 136 kann mit der Schwenknase 98 in Eingriff gebracht, sodass ein Schwenkpunkt zum Verschwenken des Hakens 10 gebildet wird.

Die Rastausnehmungen 120, 124 der Rastformation 108 haben jeweils einen schrägen Boden. Die Rastvorsprünge 126 und 130 haben eine schräge Stirnfläche. Die schrägen Böden der Rastausnehmungen 120, 124 und die schrägen Stirnflächen 126, 130 sind gegenläufig geneigt.

Die Rastformation 50 an der Rastleiste 48 ist zum in Eingriff bringen mit der Rastformation 22 an dem Schenkel 16 ausgebildet. Die Rastformation 108 an der Rastleiste 104 ist zum in Eingriff bringen mit der Rastformation 90 an dem Schenkel 18 ausgebildet.

Figur 17 zeigt eine Draufsicht auf die Fußplatte 46. Die Fußplatte 46 hat eine Längsachse L. Die Fußplatte 46 hat die Rastleisten 48 und 104, die an ihren Innenseiten 58, 106 die Rastformationen 50 und 108 aufweisen. Die Rastleisten 48 und 104 erstrecken sich parallel zur Längsachse L der Fußplatte 46. Zwischen den Rastleisten 48 und 104 sind die Befestigungsöffnungen 60 in der Fußplatte 46 ausgebildet. Die Befestigungsöffnungen 60 sind entlang der Längsachse L versetzt zueinander an der Fußplatte 46 ausgebildet. Durch die Befestigungsöffnungen 60 kann die Befestigungsposition der Fußplatte 46 an einem Dachsparren (nicht gezeigt) in Abhängigkeit der zur Befestigung ausgewählten Befestigungsöffnungen 60 verändert werden.

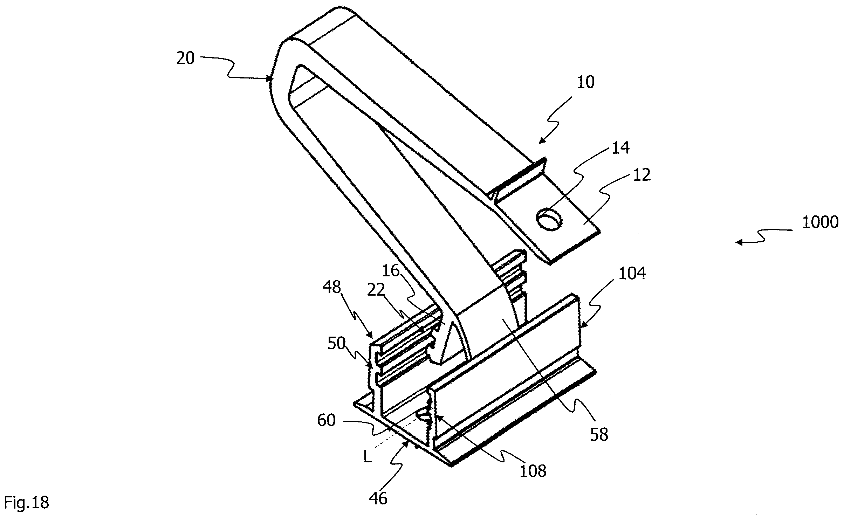

Die Figuren 18 bis 23 zeigen verschiedene Ansichten der Befestigungsvorrichtung 1000, in denen der Haken 10 in unterschiedlichen Position bzw. Höhen an der Fußplatte angebracht ist. Der Haken 10 kann in zwei unterschiedlichen Positionen mit der Fußplatte 46 verbunden werden. Die Befestigungsvorrichtung 1000 erlaubt somit eine Verstellung der Höhe des Hakens 10 relativ zu einem Dachsparren oder zur Fußplatte 46. Mit Bezug auf die Figuren 18 bis 21 wird die Verbindung des Hakens 10 mit der Fußplatte 46 in unterschiedlichen Höhen beschrieben. Die Position des Hakens 10 an der Fußplatte 46 ist entlang der Längsachse L der Fußplatte 46 frei wählbar. Die Fußplatte 46 ist so ausgebildet, dass entlang der Längsachse L der Fußplatte 46 der Haken 10 in verschiedenen Positionen Platte 46 verrastet werden kann.

Figur 18 zeigt eine perspektivische Ansicht der Befestigungsvorrichtung 1000, in der der Haken 10 mit der Rastformation 22 an dem Schenkel 16 in die Rastformation 50 an der Rastleiste 48 eingehängt wurde. Der Haken 10 wurde in der dargestellten Position noch nicht endgültig mit der Fußplatte 46 verbunden.

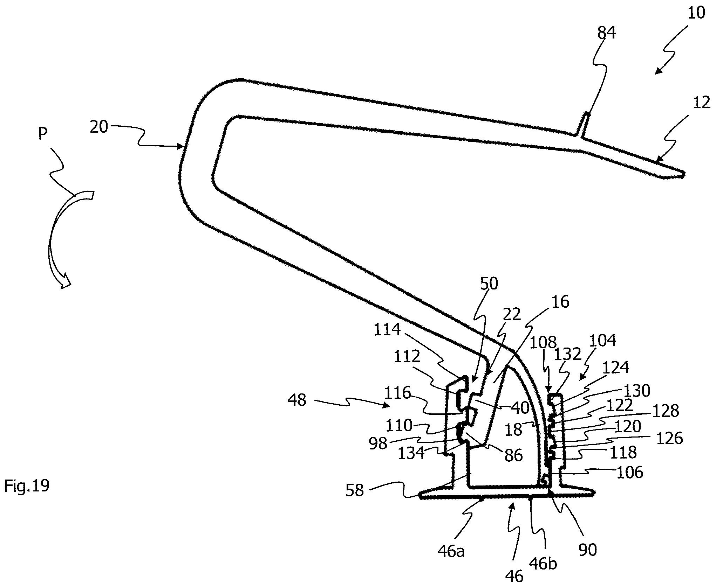

Figur 19 zeigt eine Seitenansicht der Befestigungsvorrichtung 1000, in der der Haken 10 mit den beiden Schenkeln 16 und 18 in den Zwischenraum zwischen den Rastleisten 48 und 104 der Fußplatte 46 eingesetzt wurde. Die Schwenknase 98 an dem Rastvorsprung 86 der Rastformation 50 an dem Schenkel 16 wird mit der Einhängenase 134 an der Rastausnehmung 110 der Rastleiste 48 in Eingriff gebracht. Die Rastformation 90 an dem Schenkel 18 kontaktiert die Innenseite 106 der Rastleiste 104 unterhalb der Rastformation 108. Anhand der Schrägstellung des Hakens 10 lässt sich erkennen, dass der Haken 10 noch nicht endgültig mit der Fußplatte 46 verrastet wurde. Zu endgültigen Verrastung wird der Haken 10 in Richtung des Pfeils P um den von der Schwenknase 98 und der Einhängenase 134 gebildeten Schwenkpunkt verschwenkt, sodass die Rastformation 90 an dem Schenkel 18 mit der Rastformation 108 der Rastleiste 104 verrastet werden kann. Durch die Schwenkbewegung in Richtung des Pfeils P wird der zweite Schenkel 18 nach oben zu der Rastformation 90 an der Rastleiste 104 bewegt. Dabei kann der Schenkel 18 elastisch ausgelenkt werden, bevor seine Rastformation 90 in die Rastformation 108 der Rastleiste 104 einrastet.

Da der Haken 10 mit dem Rastvorsprung 86 in die untere Rastausnehmung 110 eingesetzt wurde, kann der Haken 10 in der ersten oder unteren Position mit der Fußplatte 46 verrastet werden. Die Rastausnehmung 110 an der Rastleiste 48 und die Rastausnehmungen 118, 120 sowie der Rastvorsprung 126 an der Rastleiste 104 legen die untere oder erste Position des Hakens 10 fest. Die Rastausnehmung 112 an der Rastleiste 48 und die Rastausnehmungen 122, 124 und der Rastvorsprung 130 an der Rastleiste 104 legen die obere oder zweite Position des Hakens 10 fest.

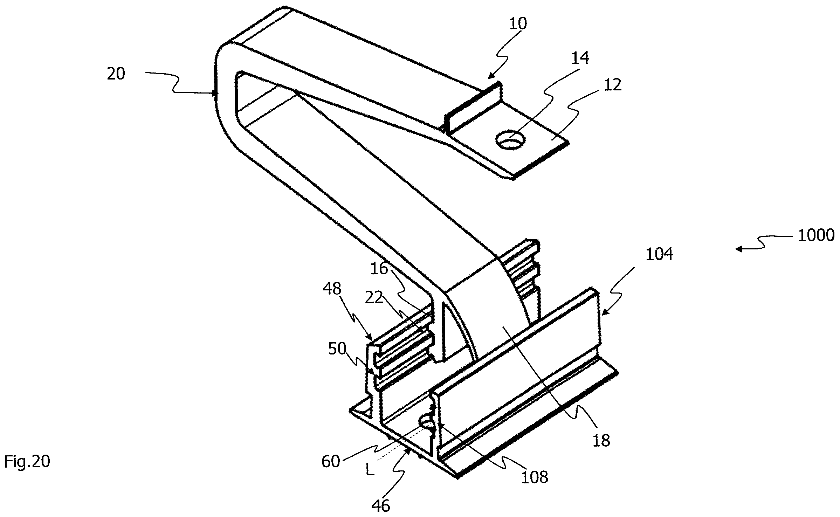

Figur 20 zeigt eine perspektivische Ansicht der Befestigungsvorrichtung 1000. Der Haken 10 wurde mit der Fußplatte 46 verrastet. Der Haken 10 befindet sich in der Ansicht gemäß Figur 20 in seiner unteren oder ersten Position.

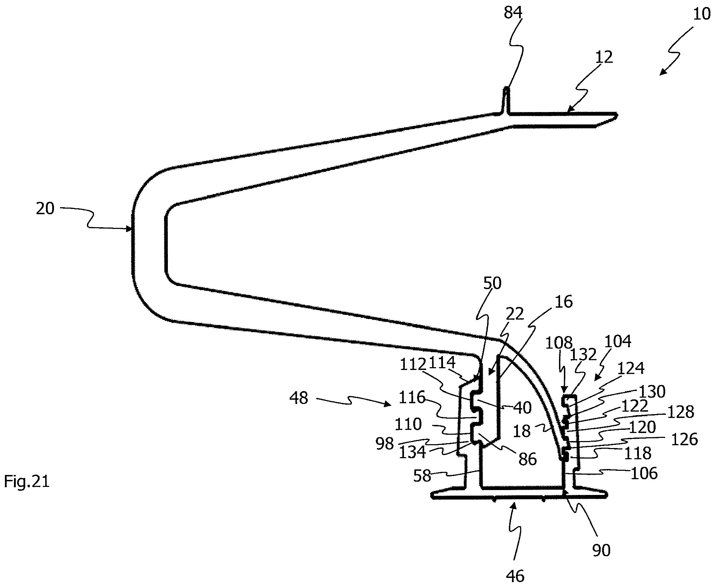

Figur 21 zeigt eine Seitenansicht der Befestigungsvorrichtung 1000, in der der Haken 10 in der unteren oder ersten Position mit der Fußplatte 46 verrastet wurde. In dieser Position greifen die Rastvorsprünge 40 und 86 der Rastformation 22 des Schenkel 16 in die Rastausnehmungen 110, 112 der Rastformation 50 an der Rastleiste 48 ein. An der Rastleiste 104 greift die Rastformation 90 an dem Schenkel 18 in die Rastausnehmungen 118 und 120 der Rastformation 108 ein. Anders ausgedrückt greift die Rastformation 90 des Schenkels 18 in die unteren Rastausnehmungen 118 und 120 an der Innenseite 106 der Rastleiste 104 ein.

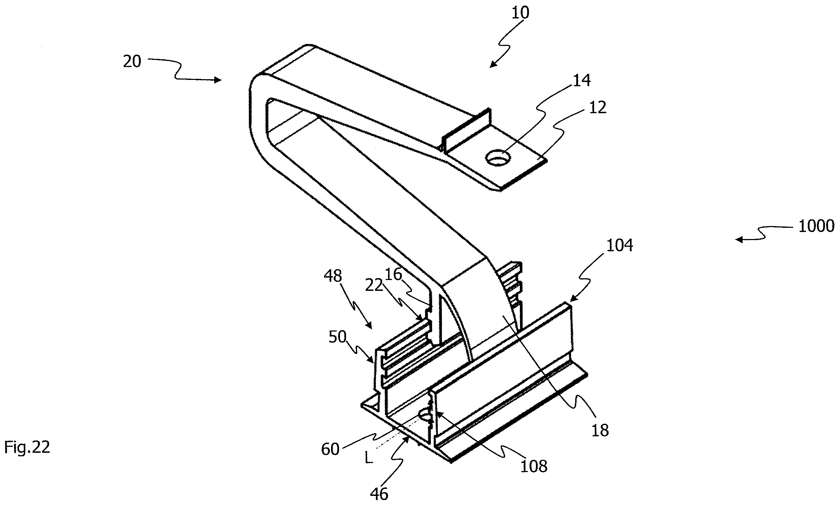

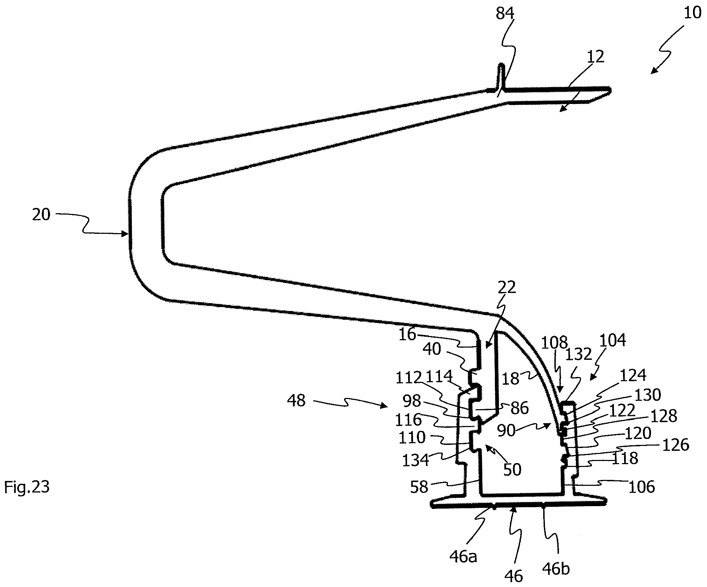

Die Figuren 22 und 23 zeigen die Befestigungsvorrichtung 1000 mit dem Haken 10 in der oberen oder zweiten Position. Der Rastvorsprung 86 der Rastformation 22 greift in die Rastausnehmung 112 der Rastformation 50 an der Rastleiste 48 ein. Der Rastvorsprung 40 der Rastformation 22 befindet sich oberhalb des Rastvorsprungs 114, der in die Rastausnehmung 88 der Rastformation 22 eingreift. Die Rastformation 90 an dem Schenkel 18 greift in die Ausnehmungen 122 und 124 der Rastformation 108 an der Rastleiste 104 ein. Die Rastformation 90 greift somit in die oberen Rastausnehmungen 122 und 124 ein.

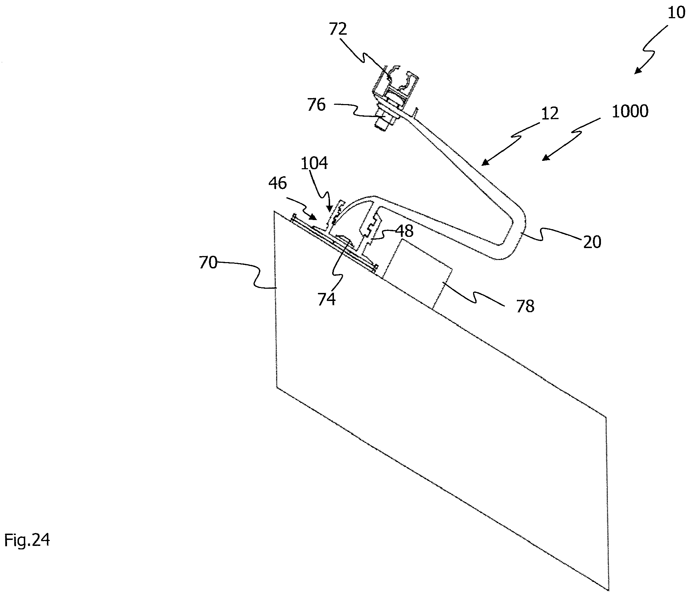

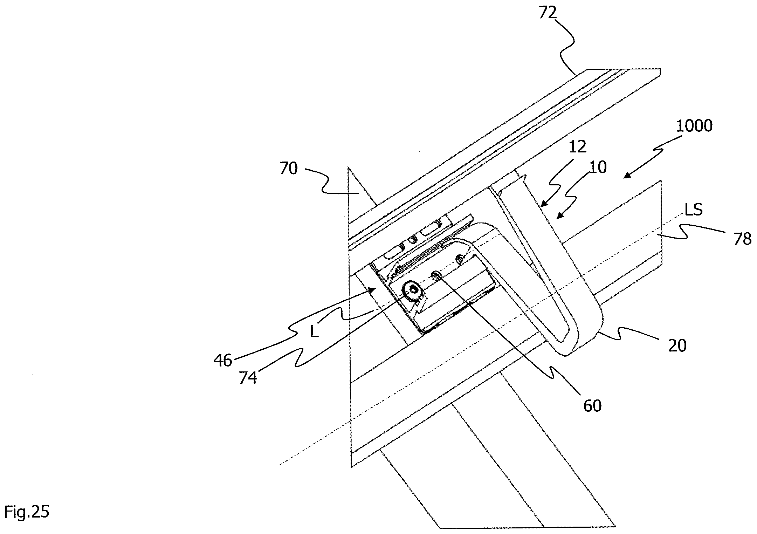

Die Figuren 24 und 25 zeigen Ansichten der Befestigungseinrichtung 1000 im an einem Sparren 70 einer Dachkonstruktion angebrachten Zustand. Die Fußplatte 46 der Befestigungsvorrichtung 1000 ist über ein Befestigungselement 74 mit der Dachkonstruktion 70 verbunden. An dem Befestigungsabschnitt 12 des Hakens 10 ist die Montageschiene 72 über das Befestigungselement 76 angebracht. Der Verbindungsabschnitt 20 des Hakens 10 zeigt in Richtung der Neigung des Sparrens 70 nach unten. Die Fußplatte 46 ist so an der Dachkonstruktion 70 angebracht, dass sich in Richtung der Neigung des Sparrens 70 die Rastleiste 104 am oberen Ende und die Rastleiste 48 am unteren Ende der Fußplatte 46 befindet. Die Fußplatte 46 ist oberhalb der Dachlatte 78 an dem Sparren 70 angebracht. In einer Richtung senkrecht zum Sparren 70 erstreckt sich der Verbindungsabschnitt 20 des Hakens 10 über der Dachlatte 78. Die Befestigungsvorrichtung 1000 kann nur mit einem einzigen Befestigungselement 74, d. h. mit einer einzigen Schraube, an dem Sparren 70 befestigt werden.

In den Figuren 24 und 25 wurde der Haken 10 in der ersten oder unteren Position mit der Fußplatte 46 verrastet. Bei der ersten oder unteren Position handelt es sich um die niedrigere Position, d. h. der Abstand zwischen dem Haken 10 und dem Sparren 70 ist geringer als in der oberen oder zweiten Position.

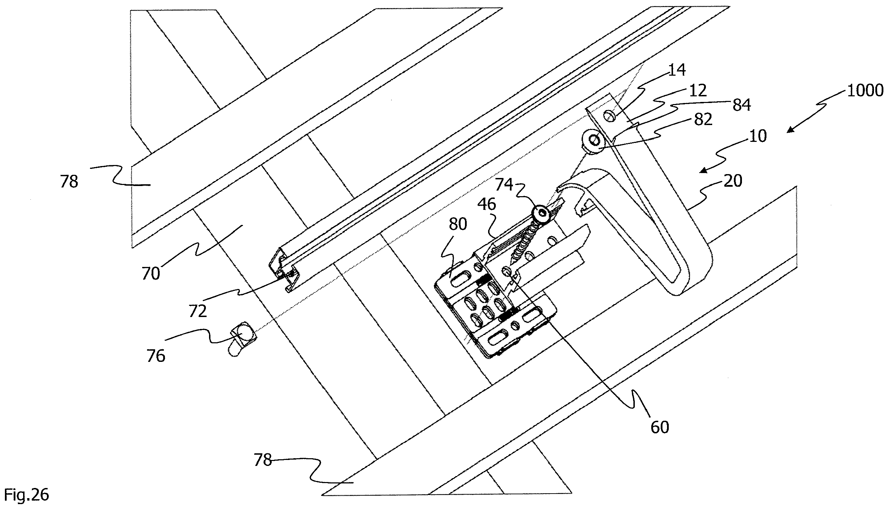

Figur 26 zeigt eine Explosionsdarstellung der Befestigungsvorrichtung 1000. Die Befestigungsvorrichtung 1000 weist die Montageplatte 80 auf. Die Montageplatte 80 und die Fußplatte 46 werden mit der Schraube 74 an dem Sparren 70 befestigt. Die Schraube 74 ist die einzige Schraube, die zur Befestigung der Befestigungsvorrichtung 1000 an dem Sparren 70 notwendig ist. Zur Befestigung der Fußplatte 46 an dem Sparren 70 wird die Schraube 74 durch eine der Befestigungsöffnungen 60 in der Fußplatte 46 und eine Öffnung in der Montageplatte 80 geführt und mit dem Sparren 70 verschraubt. Auch bei dieser Ausführungsform können mit der Montageplatte 80 Höhenunterschiede zwischen dem Haken 10 und dem Sparren 70 ausgeglichen werden, d. h. die Montageplatte 80 wird als Höhenausgleich.

Die Fußplatte 46 und die Montageplatte 80 werden zwischen zwei Dachlatten 78 an dem Sparren 70 angebracht. Wenn die Fußplatte 46 an dem Sparren 70 befestigt ist, wird der Haken 10 in die Fußplatte 46 eingehängt und mit dieser verrastet. Im Anschluss daran wird der Befestigungsbolzen 76 in die Öffnung 14 an dem Befestigungsabschnitt 12 des Hakens 10 eingesetzt und über die Mutter 82 vorläufig an dem Haken 10 gesichert. Die Befestigungsbolzen 76 können in die Montageschiene 72 eingesetzt und bis zur Position des Hakens 10 verschoben werden. Die Befestigungsbolzen 76 können durch die Öffnung 14 geführt und mit der Mutter 82 verschraubt werden. Alternativ zu dieser Vorgehensweise kann der Befestigungsbolzen 76 in die Öffnung 14 an dem Befestigungsabschnitt 12 des Hakens 10 eingesetzt und über die Mutter 82 vorläufig an dem Haken 10 gesichert. Im Anschluss daran wird die Montageschiene 72 auf den Befestigungsbolzen 76 aufgeschoben. Dann wird die Mutter 80 angezogen und die Montageschiene 72 ist fest mit dem Haken 10 bzw. der Befestigungseinrichtung 1000 verbunden.

## Patentansprüche

1. Befestigungsvorrichtung (1000) zur Befestigung von Solarmodulen an einem Dach, wobei die Befestigungsvorrichtung (1000) aufweist:
wenigstens einen Haken (10), wobei der Haken (10) wenigstens einen Befestigungsabschnitt (12) hat, der zur Befestigung einer Montageschiene (72) ausgebildet ist, wobei der Haken (10) wenigstens einen ersten Schenkel (16) und wenigstens einen zweiten Schenkel (18) aufweist, wobei der wenigstens eine erste Schenkel (16) wenigstens eine Rastformation (22) aufweist, und
wenigstens eine Fußplatte (46), die wenigstens eine Rastleiste (48) zum Verrasten mit dem Haken (10) hat, wobei die wenigstens eine Rastleiste (48) wenigstens eine Rastformation (50) aufweist,
wobei der erste Schenkel (16) und der zweite Schenkel (18) des Hakens (10) mit der Fußplatte (46) koppelbar sind,
wobei die Rastformation (22) an dem ersten Schenkel (16) mit der Rastformation (50) an der Rastleiste (48) verrastbar ist,
wobei der wenigstens eine Haken (10) und die wenigstens eine Fußplatte (46) derart ausgebildet sind, dass der Haken (10) über eine Schwenkbewegung des wenigstens einen Hakens (10) mit der wenigstens einen Fußplatte (46) verrastbar ist,
**dadurch gekennzeichnet, dass** die wenigstens eine Fußplatte (46) wenigstens eine Aufnahme (52) für das freie Ende des zweiten Schenkels (18) aufweist,
wobei die Aufnahme (52) wenigstens einen Einhängehaken (54) und eine Stützleiste (56) zum Abstützen des zweiten Schenkels (18) aufweist.

2. Befestigungsvorrichtung (1000) nach Anspruch 1,
wobei der zweite Schenkel (18) wenigstens eine Einhängenase (26) zur Kopplung mit der wenigstens einen Fußplatte (46) aufweist.

3. Befestigungsvorrichtung (1000) zur Befestigung von Solarmodulen an einem Dach, wobei die Befestigungsvorrichtung (1000) aufweist:
wenigstens einen Haken (10), wobei der Haken (10) wenigstens einen Befestigungsabschnitt (12) hat, der zur Befestigung einer Montageschiene (72) ausgebildet ist, wobei der Haken (10) wenigstens einen ersten Schenkel (16) und
wenigstens einen zweiten Schenkel (18) aufweist, wobei der wenigstens eine erste Schenkel (16) wenigstens eine Rastformation (22) aufweist, wobei der wenigstens eine zweite Schenkel (18) wenigstens eine Rastformation (90) aufweist, und wenigstens eine Fußplatte (46), die wenigstens eine erste Rastleiste (48) und wenigstens eine zweite Rastleiste (104) zum Verrasten mit dem Haken (10) aufweist,
wobei die wenigstens eine erste Rastleiste (48) und die wenigstens eine zweite Rastleiste (104) jeweils wenigstens eine Rastformation (50, 108) aufweisen,
wobei der erste Schenkel (16) und der zweite Schenkel (18) des Hakens (10) mit der Fußplatte (46) koppelbar sind,
wobei die Rastformation (22) an dem ersten Schenkel (16) mit der Rastformation (50) an der ersten Rastleiste (48) verrastbar ist,
wobei die Rastformation (90) an dem zweiten Schenkel (18) mit der Rastformation (108) an der zweiten Rastleiste (104) verrastbar ist,
wobei der wenigstens eine Haken (10) und die wenigstens eine Fußplatte (46) derart ausgebildet sind, dass der Haken (10) über eine Schwenkbewegung des wenigstens einen Hakens (10) mit der wenigstens einen Fußplatte (46) verrastbar ist.

4. Befestigungsvorrichtung (1000) nach einem der Ansprüche 1 bis 3,
wobei die wenigstens eine Rastformation (22) an dem ersten Schenkel (26) und die Rastformation (50) an der wenigstens einen Rastleiste (48) jeweils wenigstens einen Rastvorsprung (40, 64) und/oder jeweils wenigstens eine Rastausnehmung (42, 66) aufweisen.

5. Befestigungsvorrichtung (1000) nach einem der Ansprüche 1 bis 4,
wobei die wenigstens eine Rastformation (22) an dem ersten Schenkel (16) und/oder die Rastformation (50) an der wenigstens einen Rastleiste (48) wenigstens eine Führungsschräge (46, 68) aufweisen.

6. Befestigungsvorrichtung (1000) nach einem der Ansprüche 1 bis 5,
wobei sich die wenigstens eine Rastleiste (48) abgewinkelt zu der wenigstens einen Fußplatte (46) erstreckt.

7. Befestigungsvorrichtung (1000) nach einem der vorangehenden Ansprüche, wobei die wenigstens eine Fußplatte (46) und der Haken (10) derart ausgebildet sind, dass der Haken (10) in unterschiedlichen Positionen an der Fußplatte (46) anbringbar ist.

8. Befestigungsvorrichtung (1000) nach einem der vorangehenden Ansprüche, wobei die Fußplatte (46) derart ausgebildet ist, dass die Position des Hakens (10) entlang der Längsachse (L) der Fußplatte (46) innerhalb der axialen Erstreckung der Fußplatte (46 frei wählbar ist.

9. Befestigungsvorrichtung (1000) nach einem der vorangehenden Ansprüche, wobei die Fußplatte (46) wenigstens eine Befestigungsöffnung (60) aufweist.

10. Befestigungsvorrichtung (1000) nach einem der vorangehenden Ansprüche, wobei die Befestigungsvorrichtung (1000) mit einem einzigen Befestigungselement (74) an einem Sparren (70) befestigbar ist.

11. Befestigungsvorrichtung (1000) nach einem der vorangehenden Ansprüche, wobei die Fußplatte (46) an ihrer Unterseite wenigstens ein vorstehendes Element (46a, 46b) aufweist.

12. Befestigungsvorrichtung (1000) nach einem der vorangehenden Ansprüche,
wobei die Befestigungsvorrichtung (1000) wenigstens eine Montageplatte (80) aufweist.

## Claims

1. Fastening device (1000) for fastening solar modules to a roof, wherein the fastening device (1000) comprises:
at least a hook (10), wherein the hook (10) has at least a fastening portion (12) configured to fasten a mounting rail (72), wherein the hook (10) comprises at least a first leg (16) and at least a second leg (18), wherein the at least one first leg (16) comprises at least a latching position (22) and
at least a base plate (46), which has at least a latching ledge (48) to catch the hook (10), wherein the at least one latching ledge (48) comprises at least a latching position (50),
wherein the first leg (16) and the second leg (18) of the hook (10) may be coupled with the base plate (46),
wherein the latching position (22) at the first leg (16) may be latched with the latching position (50) at the latching ledge (48),
wherein the at least one hook (10) and the at least one base plate (46) are configured in such that the hook (10) may be latched to the at least one base plate (46) via a swivel movement of the at least one hook (10),
**characterized in that**
the at least one base plate (46) comprises at least a receptacle (52) for the free end of the second leg (18),
wherein the receptacle (52) comprises at least a mounting hook (54) and a support ledge (56) to support the second leg (18).

2. Fastening device (1000) of claim 1,
wherein the second leg (18) comprises at least a hooking nose (26) to be coupled to the at least one base plate (46).

3. Fastening device (1000) for fastening solar modules to a roof, wherein the fastening device (1000) comprises:
at least a hook (10), wherein the hook (10) has at least a fastening portion (12) configured to fasten a mounting rail (72), wherein the hook (10) comprises at least a first leg (16) and at least a second leg (18), wherein the at least one first leg (16) comprises at least a latching position (22), wherein the at least one second leg (18) comprises at least a latching position (90) and at least a base plate (46) comprising at least a first latching ledge (48) and at least a second latching ledge (104) for coupling with the hook (10), wherein at least a first latching ledge (48) and at least a second latching ledge comprise at least a second latching ledge (104) comprising a latching position (50, 108) respectively,
wherein the first leg (16) and the second leg (18) of the hook (10) may be coupled with the base plate (46),
wherein the latching position (22) may be latched to the first leg (16) with the latching position (50) at the first latching ledge (48),
wherein the latching position (90) at the second leg (18) may be latched with the latching position (108) at the second latching ledge (104),
wherein the at least one hook (10) and the at least one base plate (46) are configured in such that the hook (10) may be latched to the at least one base plate (46) via a swivel movement of the at least one hook (10).

4. Fastening device (1000) of any one of claims 1 to 3,
wherein the at least one latching position (22) at the first leg (26) and the latching position (50) at the at least one latching ledge (48) each have at least a latching protrusion (40, 64) and/or each comprise at least a latching recess (42, 66).

5. Fastening device (1000) of any one of claims 1 to 4,
wherein the at least one latching position (22) at the first leg (16) and/or the latching position (50) at the at least one latching ledge (48) comprise at least a guidance slope (46, 68).

6. Fastening device (1000) of any one of claims 1 to 5,
wherein the at least one latching ledge (48) extends to the at least one base plate (46) at an angle.

7. Fastening device (1000) of any one of the preceding claims, wherein the at least one base plate (46) and the hook (10) are configured in such that the hook (10) may be attached at the base plate (46) in different positions.

8. Fastening device (1000) of any one of the preceding claims, wherein the base plate (46) is configured in such that the position of the hook (10) may be selected freely along the longitudinal axis (L) of the base plate (46) within the axial extent of the base plate (46).

9. Fastening device (1000) of any one of the preceding claims, wherein the base plate (46) comprises at least one fastening aperture (60).

10. Fastening device (1000) of any one of the preceding claims, wherein the fastening device (1000) may be fastened to a rafter (70) with a single fastening member (74).

11. Fastening device (1000) of any one of the preceding claims,
wherein the base plate (46) comprises at least a protruding member (46a, 46b) at its bottom side.

12. Fastening device (1000) of any one of the preceding claims, wherein the fastening device (1000) comprises at least a mounting plate (80).

## Revendications

1. Dispositif de fixation (1000) pour fixer des modules solaires à un toit, le dispositif de fixation (1000) comprenant :
au moins un crochet (10), le crochet (10) comportant au moins une section de fixation (12) conçue pour la fixation d'un rail de montage (72), le crochet (10) comprenant au moins une première branche (16) et au moins une deuxième branche (18), ladite au moins une première branche (16) comprenant au moins une formation d'encliquetage (22), et
au moins une embase (46) qui comporte au moins une bande d'encliquetage (48) pour l'encliquetage avec le crochet (10), ladite au moins une bande d'encliquetage (48) comprenant au moins une formation d'encliquetage (50),
dans lequel la première branche (16) et la deuxième branche (18) du crochet (10) peuvent être couplées à l'embase (46),
dans lequel la formation d'encliquetage (22) sur la première branche (16) peut être encliquetée avec la formation d'encliquetage (50) sur la bande d'encliquetage (48),
dans lequel ledit au moins un crochet (10) et ladite au moins une embase (46) sont conçus de telle sorte que le crochet (10) peut être encliqueté avec ladite au moins une embase (46) par un mouvement de pivotement dudit au moins un crochet (10),
**caractérisé en ce que**
ladite au moins une embase (46) comprend au moins un logement (52) pour l'extrémité libre de la deuxième branche (18),
le logement (52) comprenant au moins un crochet d'accrochage (54) et une bande d'appui (56) pour l'appui de la deuxième branche (18).

2. Dispositif de fixation (1000) selon la revendication 1,
dans lequel la deuxième branche (18) comprend au moins un nez d'accrochage (26) pour le couplage avec ladite au moins une embase (46).

3. Dispositif de fixation (1000) pour fixer des modules solaires à un toit, le dispositif de fixation (1000) comprenant :
au moins un crochet (10), le crochet (10) comportant au moins une section de fixation (12) conçue pour la fixation d'un rail de montage (72), le crochet (10) comprenant au moins une première branche (16) et au moins une deuxième branche (18), ladite au moins une première branche (16) comprenant au moins une formation d'encliquetage (22), ladite au moins une deuxième branche (18) comprenant au moins une formation d'encliquetage (90), et
au moins une embase (46) qui comprend au moins une première bande d'encliquetage (48) et au moins une deuxième bande d'encliquetage (104) pour l'encliquetage avec le crochet (10),
dans lequel ladite au moins une première bande d'encliquetage (48) et ladite au moins une deuxième bande d'encliquetage (104) comprennent chacune au moins une formation d'encliquetage (50, 108),
dans lequel la première branche (16) et la deuxième branche (18) du crochet (10) peuvent être couplées à l'embase (46),
dans lequel la formation d'encliquetage (22) sur la première branche (16) peut être encliquetée avec la formation d'encliquetage (50) sur la première bande d'encliquetage (48),
dans lequel la formation d'encliquetage (90) sur la deuxième branche (18) peut être encliquetée avec la formation d'encliquetage (108) sur la deuxième bande d'encliquetage (104),
dans lequel ledit au moins un crochet (10) et ladite au moins une embase (46) sont conçus de telle sorte que le crochet (10) peut être encliqueté avec ladite au moins une embase (46) par un mouvement de pivotement dudit au moins un crochet (10).

4. Dispositif de fixation (1000) selon l'une quelconque des revendications 1 à 3,
dans lequel ladite au moins une formation d'encliquetage (22) sur la première branche (26) et la formation d'encliquetage (50) sur ladite au moins une bande d'encliquetage (48) comprennent chacune au moins une saillie d'encliquetage (40, 64) et/ou chacune au moins un évidement d'encliquetage (42, 66).

5. Dispositif de fixation (1000) selon l'une quelconque des revendications 1 à 4,
dans lequel ladite au moins une formation d'encliquetage (22) sur la première branche (16) et/ou la formation d'encliquetage (50) sur ladite au moins une bande d'encliquetage (48) comprennent au moins un biseau de guidage (46, 68).

6. Dispositif de fixation (1000) selon l'une quelconque des revendications 1 à 5,
dans lequel ladite au moins une bande d'encliquetage (48) s'étend de manière coudée par rapport à ladite au moins une embase (46).

7. Dispositif de fixation (1000) selon l'une quelconque des revendications précédentes,
dans lequel ladite au moins une embase (46) et le crochet (10) sont conçus de telle sorte que le crochet (10) peut être monté sur l'embase (46) dans différentes positions.

8. Dispositif de fixation (1000) selon l'une quelconque des revendications précédentes,
dans lequel l'embase (46) est conçue de telle sorte que la position du crochet (10) le long de l'axe longitudinal (L) de l'embase (46) peut être choisie librement à l'intérieur de l'extension axiale de l'embase (46).

9. Dispositif de fixation (1000) selon l'une quelconque des revendications précédentes, dans lequel l'embase (46) comprend au moins une ouverture de fixation (60).

10. Dispositif de fixation (1000) selon l'une quelconque des revendications précédentes,
dans lequel le dispositif de fixation (1000) peut être fixé à un chevron (70) à l'aide d'un seul élément de fixation (74).

11. Dispositif de fixation (1000) selon l'une quelconque des revendications précédentes,
dans lequel l'embase (46) comprend au moins un élément en saillie (46a, 46b) sur sa face inférieure.

12. Dispositif de fixation (1000) selon l'une quelconque des revendications précédentes,
dans lequel le dispositif de fixation (1000) comprend au moins une plaque de montage (80).
